Europäisches Patentamt

European Patent Office

Office européen des brevets

(19)

(11) Publication number: **0 256 621**
**A1**

## (12) EUROPEAN PATENT APPLICATION

(21) Application number: 87304316.0

(22) Date of filing: 15.05.87

(51) Int. Cl.⁴: **F16K 1/00** , **F16K 1/34**

(30) Priority: 23.05.86 GB 8612663

(43) Date of publication of application:
24.02.88 Bulletin 88/08

(84) Designated Contracting States:
DE ES FR IT NL SE

(71) Applicant: **HATTERSLEY NEWMAN HENDER LIMITED**
**St. Catherine's Avenue**
**Doncaster Yorkshire(GB)**

(72) Inventor: **Tomlinson, Mark Ian**
**34 Carlton Avenue Upholland Skelmersdale**
**Lancashire, WN8 0AE(GB)**

(74) Representative: **Downey, William Gerrard et al**
**WILSON GUNN & ELLIS 41-51 Royal**
**Exchange Cross Street**
**Manchester M2 7BD(GB)**

(54) Pressure tapping and isolating valve.

(57) A pressure tapping and isolating valve comprises a valve body (I and 2) defining a pressure fluid passage having two branches. A spring loaded elastomeric seated valve cone (I5) is disposed to open and close one branch and a ball (4) disposed to be acted upon by a rotatable valve stem (6) is disposed to close the other branch. In use, the cone (I5) is displaced from the closed position by the probe of a manometer connected to the corresponding branch. Withdrawing the valve stem then permits access of pressure fluid in a line to which the other branch is connected to the manometer for measurement.

FIG.1

## PRESSURE TAPPING AND ISOLATING VALVE

The present invention relates to a combined pressure tapping and isolating valve.

Such tappings facilitate fluid flow measurements and are generally known. One such known tapping is described in United Kingdom Patent Specification No. 2,019,533B. This arrangement incorporates a needle valve and a ball valve to provide isolation. The use of a needle valve restricts self centring.

According to the present invention a combined pressure tapping and isolating valve comprises a valve body defining a pressure fluid passage having two branches in respective ones of which valve closure members are disposed, resilient means urging one of the valve closure members into the closed position and a member for urging the other valve closure member, which is a ball, into the closed position, the closure members being displaceable to the open position to permit communication between a line in which the pressure is to be measured and a measuring device.

In a preferred embodiment of the invention, the first mentioned valve closure member is an elastomeric seated cone which is displaced against its associated resilient means by means of the probe of a manometer which forms the measuring device. The cone is machined to accept the elastomeric seat and to locate the resilient means. The ball is displaced by the pressure fluid on withdrawal of the member which hold it in the closed position. Advantageously, this ball is urged off its seat by means of resilient means, the ball then being positively held between the resilient means and the member. The member may be an externally screwthreaded stem which can be screwed into and out of an internally screwthreaded passage in the valve body. For this purpose the stem is provided with a shaped end which is protected by means of a lockshield. In both cases the resilient means are springs.

In order that the invention may be more clearly understood, one embodiment thereof will now be described, by way of example, with reference to the accompanying drawings, in which:-

Figure I shows a sectional view of a combined pressure tapping and isolating valve, and

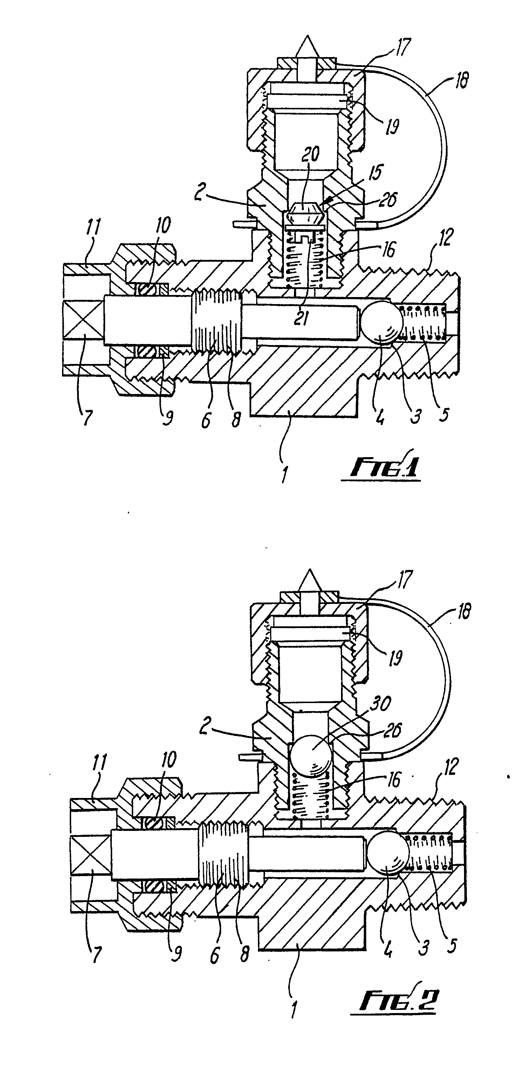

Figure 2 is a sectional view of a modified version of the valve of Figure I.

Referring to the drawing, the valve comprises a body having a housing I into which is inserted a secondary housing 2. The housing I is formed to provide a valve seat 3 on which a valve ball 4 seats. The valve ball 4 is held between a spring 5, which tends to urge the ball off the seat and a valve stem 6 which is provided with a squared end 7 for turning at its end remote from the ball 4 and is externally screwthreaded along at part of its length at 8. The bore in which the stem is disposed is internally screwthreaded in complementary manner. A washer 9 and 'O' ring seal IO surround the stem and an internally screwthreaded lockshield II is screwed onto the housing I, which is externally screwthreaded for the purpose. This lockshield II, which is level with the end of the stem 6 in the closed position, protects the operative end 7 of the stem. The end of the housing I remote from the end 7 of the stem is also externally screwthreaded at I2 for connection to the measuring point in the pipeline the pressure in which is to be monitored.

The secondary housing 2 houses a cone check valve. The cone I5 is shaped to retain an elastomeric 'O' ring 20 which seats against a valve seat 26 provided by a shoulder on the internal surface of a through bore in the housing 2. This valve cone I5 is also shaped at 2I to locate a spring I6 which urges the cone I5 towards the seat I6 to the closed position. The housing 2 is externally screwthreaded and onto this screwthreaded portion is screwed a complementary internally screwthreaded cap I7 which is connected additionally to the body by means of a safety tab I8. A washer I9 surrounds the housing 2 within the cap I7. The use of a ball for the main valve closure member facilitates self centering, taking up any eccentricity in the valve seats.

In use, the valve is connected to the pipe or duct the pressure and flow in which is to be monitored. Usually two valves are connected to the line on opposite sides of, for example, an orifice plate so that the pressure differential across the plate may be measured and the flow determined from that using appropriate graphs or formuli.

The valves are connected to the pipelines either directly or through an adapter through the externally screwthreaded end I2. To take a measurement, for each valve a manometer is attached to housing 2 after removing cap I7. The manometer comprises a probe which displaces the ball I5 from its seat against the force of spring I6. The stem 6 is screwed out thus allowing the ball 4 to be pushed off its seat by means of the spring 5. This provides a pressure fluid passage from the pipeline permitting a measurement to be made. Closing the valve down is the reverse of the procedure just described.

It will be appreciated that the above embodiment has been described by way of example only and that many variations are possible without departing from the scope of the invention. For example, the elastomeric seated cone, which provides good fluid tight sealing, may under certain circumstances be replaced by a valve ball. This facilitates production and lowers production costs.

Such an arrangement is illustrated in Figure 2 where the ball is referenced 30. All other parts bear the same references as their corresponding parts in the Figure I embodiment.

## Claims

I. A combined pressure tapping and isolating valve comprises a valve body (I and 2) defining a pressure fluid passage having two branches in respective ones of which valve closure members (4 and I5) are disposed, resilient means (I6) urging one of the valve closure members into the closed position and a member (6) for urging the other valve closure member (4), into the closed position the closure members being displaceable to the open position to permit communication between a line in which the pressure is to be measured and a measuring device characterised in that the said other valve closure member (4) is a ball.

2. A combined pressure tapping and isolating valve as claimed in claim I, in which the said one valve closure member (I5) comprises a resilient seat (20).

3. A combined pressure tapping and isolating valve as claimed in claim 2, in which the resilient seat is an elastomeric 'O' ring (20).

4. A combined pressure tapping and isolating valve as claimed in claim I, 2 or 3, in which the said one valve closure member (I5) is substantially conical.

5. A combined pressure tapping and isolating valve as claimed in any preceding claim, in which the said one valve closure member (I5) is shaped to locate the resilient means (I6).

6. A combined pressure tapping and isolating valve as claimed in any preceding claim, in which the resilient means (I6) is a spring.

7. A combined pressure tapping and isolating valve as claimed in any preceding claim, in which resilient means are provided to urge the ball (4) away from the valve seat (3).

8. A combined pressure tapping and isolating valve as claimed in claim 7, in which the resilient means comprises a spring.

9. A combined pressure tapping and isolating valve as claimed in any preceding claim, in which the means (6) for urging the other valve closure member (4) comprises a valve stem which is externaly screwthreaded and disposed in an internally screwthreaded bore and may be axially displaced therein by rotation.

I0. A combined pressure tapping and isolating valve as claimed in any preceding claim, in which the said one valve closure member is a ball.

_FIG.1_

_FIG.2_

## DOCUMENTS CONSIDERED TO BE RELEVANT

EP 87304316.0

| Category | Citation of document with indication, where appropriate, of relevant passages | Relevant to claim | CLASSIFICATION OF THE APPLICATION (Int. Cl.4) |
|---|---|---|---|
| D,A | <u>GB - A - 2 019 533</u> (CRANE LTD)<br>* Fig. description; fig. 1 * | 1,5,6,<br>10 | F 16 K 1/00<br>F 16 K 1/34 |
| A | <u>DE - A1 - 3 002 768</u> (KERNFOR-<br>SCHUNGSANLAGE JÜLICH GMBH)<br>* Totality * | 1,4-6,<br>10 | |
| A | <u>EP - A2 - 0 140 106</u> (NINNELT<br>GMBH UND CO. KG)<br>* Page 4, line 1 - page 7, line 5; fig. 1,3 * | 1,4-6 | |
| A | <u>US - A - 2 245 210</u> (C.B.MC<br>ELWAINE)<br>* Fig. 3 * | 1,5,6 | |
| | | | **TECHNICAL FIELDS SEARCHED (Int. Cl 4)** |
| P,A | <u>DE - C1 - 3 622 527</u> (DRÄGERWERK<br>AG)<br>* Totality * | 1,5-10 | F 16 K 1/00<br>F 16 K 11/00 |

The present search report has been drawn up for all claims

| Place of search | Date of completion of the search | Examiner |
|---|---|---|
| VIENNA | 12-11-1987 | ROUSSARIAN |